# EUROPEAN PATENT APPLICATION

(11) **EP 1 956 764 A1**
(43) Date of publication of application: **13.08.2008**
(21) Application number: 06833264.2
(22) Date of filing: 24.11.2006
(51) Int. Cl.: H04L 12/56

(54) **COMMUNICATION SYSTEM, COMMUNICATION DEVICE, AND METHOD FOR CONTROLLING TRANSMISSION LINE THEREOF**

(30) Priority: 24.11.2005 JP 2005337974
(71) Applicant: NEC Corporation, Minato-ku Tokyo 108-8001 (JP)
(72) Inventor: NOMA, Satoshi, Tokyo 108-8001 (JP)
(74) Representative: Glawe, Delfs, Moll
(86) International application number: PCT/JP2006/323460
(87) International publication number: WO 2007/061060

(57) **Abstract**

A communication system capable of making a communication utilizing a plurality of transport resources by exchanging control signals between communication devices. A single control signal transmitted and received between the communication devices contains information indicating that a transport resource is being utilized for the communication. The communication device comprises transport resource management section 11 for managing the state of the transport resources and control signal control section 10 for transmitting and receiving the control signals.

## Description

### TECHNICAL FIELD

The present invention relates to a communication system which utilizes a transport resource for transmitting and receiving user data between devices, a communication device, and a method for controlling a transport resource thereof.

### BACKGROUND ART

Generally, in a mobile communication system, a variety of existing transport resources is utilized to transmit and receive user data between communication devices. As a representative transport resource utilized by communication devices, there is, for example, an ATM (Asynchronous Transfer Mode) communication network (see Japanese Patent Laid-Open No. 10-190633 and Japanese Patent Laid-Open No. 2000-041051).

A description will be given of a conventional transport resource control method utilizing this ATM communication network with reference to the drawings.

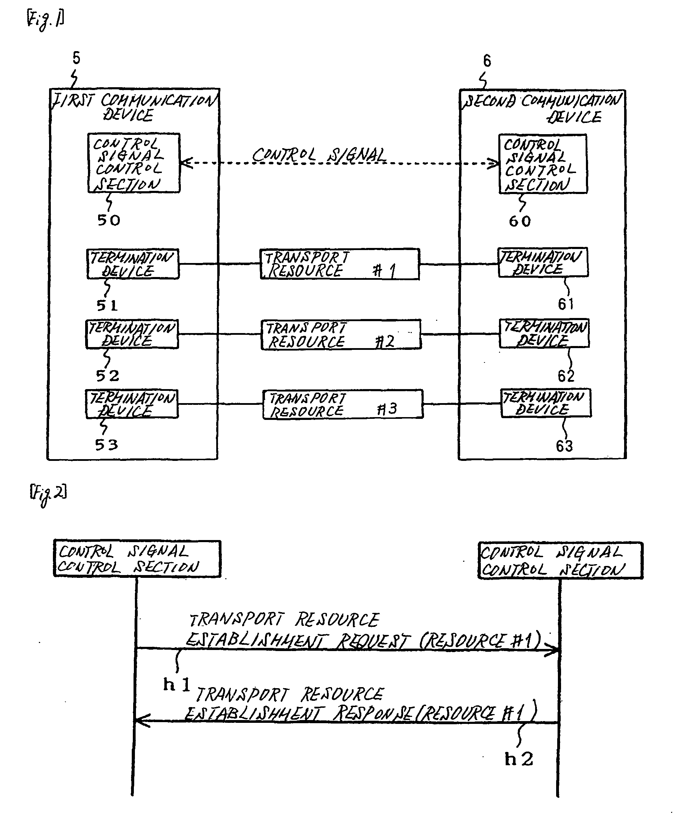

Fig. 1 is a block diagram showing the configuration of a conventional communication system which utilizes transport resources to make communications.

Fig. 1 shows an exemplary configuration when two communication devices (first communication device 5 and second communication device 6) communicate utilizing a plurality of transport resources (transport resources #1 - #3 in Fig. 1). First communication device 5 comprises termination devices 51 - 53 for connection to transport resources #1 - #3, while second communication device 6 comprises termination devices 61 - 63 for connection to transport resources #1 - #3. Termination devices 51 and 61 are devices for making communications utilizing transport resource #1, while termination devices 52 and 62 are devices for making communications utilizing transport resource #2. Also, termination devices 53 and 63 are devices for making communications utilizing transport resource #3.

First communication device 5 and second communication device 6 shown in Fig. 1 can utilize a plurality of transport resources by exchanging a variety of control signals. For example, when an ATM communication network is utilized as a transport resource, communication lines, exchangers, relay devices and the like of the ATM communication network can be utilized by exchanging a transport resource establishment request and release request, a fault occurrence notification and the like as ATM control signals. These ATM control signals contain a variety of information required to control transport resource such as successful or unsuccessful establishment of a transport resource, the presence or absence of a fault occurring in a transport resource, and the like. The ATM control signal is transmitted and received by control signal control section 50 provided in first communication device 5 and control signal control section 60 provided in second communication device 6.

Referring next to Figs. 2 to 4, a description will be given of a procedure for exchanging control signals between first communication device 5 and second communication device 6 shown in Fig. 1.

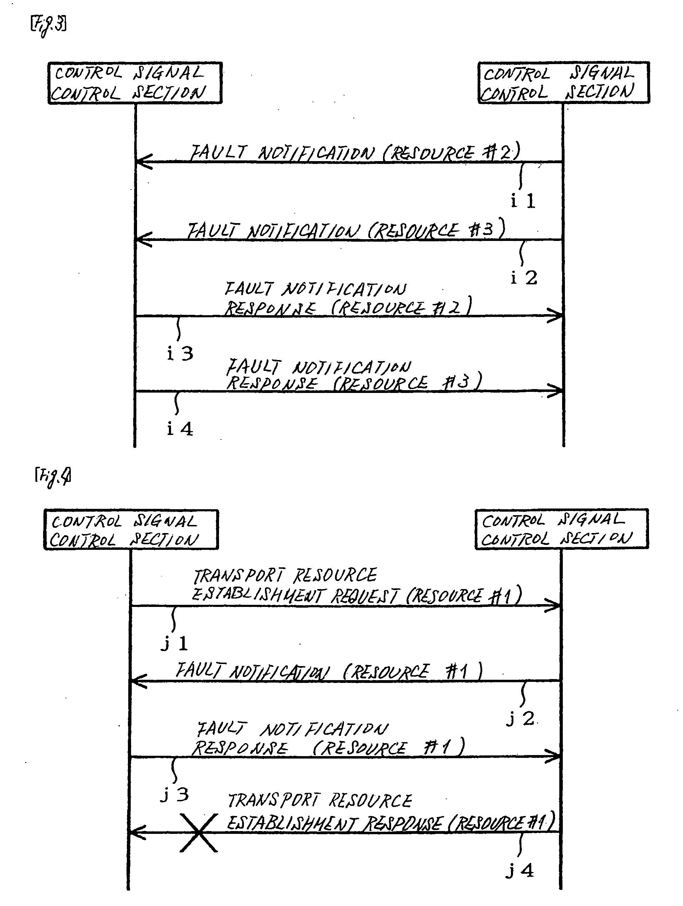

Fig. 2 shows a procedure for exchanging ATM control signals when a transport resource is established between first communication device 5 and second communication device 6 shown in Fig. 1 (the established one is corresponding to transport resource #1), while Figs. 3 and 4 show a procedure for exchanging ATM control signals when a fault occurs on the transport resource for notifying this failure thereon.

As shown in Fig. 2, when a transport resource is to be established between first communication device 5 and second communication device 6, first communication device 5 transmits a transport resource establishment request, which is an ATM control signal for requesting the establishment of a transport resource, to the second communication device (step h1). Here, this request includes information indicative of the transport resource #1 utilized in communications.

Upon receipt of the transport resource establishment request from first communication path 5, second communication device 6 analyzes the contents of the request, and determines whether or not to accept a communication with first communication device 5 utilizing transport resource #1. When accepting communication utilizing transport line resource #1, second communication device 6 returns a transport resource establishment response, which is an ATM signal, to first communication device 5 (step h2).

Fig. 3 shows a procedure for exchanging an ATM control signal when transport resources #2 and #3 shown in Fig. 1 become unavailable due to the occurrence of faults.

In this event, upon detecting that faults have occurred in transport resources #2 and #3, second communication device 6 transmits a fault notification signal, which is an ATM control signal containing information indicative of transport resources #2 and #3 on which the occurrence of the faults has been detected, to first communication device 5. In this event, in a conventional transport resource control method, a fault notification signal (resource #2) for notifying that the fault has occurred in transport resource #2 and a fault notification signal (resource #3) for notifying that the fault has occurred in transport resource #3 are separately transmitted from second communication device 6 to first communication device 5 (steps i1, i2).

On the other hand, a fault notification response signal (#2) which is an ATM control signal for responding to the fault notification signal (resource #2), and a fault notification response signal (#3) which is an ATM control signal for responding to the fault notification signal (resource #3) are individually returned from first communication device 5 to second communication device 6 (steps i3, i4).

Fig. 4 shows a procedure for exchanging ATM control signals when the occurrence of a fault on transport resource #1 is detected when a transport resource is established between first communication device 5 and second communication device 6 shown in Fig. 1.

In this event, when first communication device 5 transmits a transport resource establishment request to the second communication device for requesting the establishment of a transport resource (step j1), second communication device 6 transmits a fault notification signal (resource #1) to first communication device 5 for notifying that a fault has occurred in transport resource #1 (step j2).

First communication device 5 returns a fault notification response signal (resource #1), which is an ATM control signal for responding to the fault notification signal (resource #1), to second communication device 6 (step j3). When a fault occurs in a transport resource during the establishment of a transport resource in this manner, no transport resource establishment response signal is returned from second communication device 6 to first communication device 5, as shown at step j4.

In the conventional transport resource control method described above, when a plurality of transport resources are simultaneously established, a plurality of control signals must be transmitted and received for exchanging information on transport resources. Also, when faults have occurred simultaneously in a plurality of transport resources, a plurality of control signals must be transmitted and received for exchanging information on the transport resources in which these faults have occurred.

### DISCLOSURE OF THE INVENTION

It is therefore an object of the present invention to provide a communication system, a communication device, and a transport resource control method, which are capable of reducing the amount of control signals which are exchanged between communication devices.

To achieve the above object, the present invention, information on a plurality of transport resources utilized in communications, a request for releasing a plurality of transport resources, a notification of faults in a plurality of transport resources, and the like is included in a single control signal which is transmitted and received between communication devices. Accordingly, the amount of control signals can be reduced.

### BRIEF DESCRIPTION OF THE DRAWINGS

[Fig. 1]
   Fig. 1 is a block diagram showing the configuration of a conventional communication system which performs communications utilizing transport resources.
[Fig. 2]
   Fig. 2 is a sequence diagram showing a procedure for exchanging ATM control signals when a transport resource is established between a first communication device and a second communication device shown in Fig. 1.
[Fig. 3]
   Fig. 3 shows a procedure for exchanging control signals when transport resources #2 and #3 shown in Fig. 1 become unavailable due to the occurrence of faults.
[Fig. 4]
   Fig. 4 is a sequence diagram showing a procedure for exchanging control signals when the occurrence of a fault is found on transport resource #1 when a transport resource is established between the first communication device and the second communication device shown in Fig. 1.
[Fig. 5]

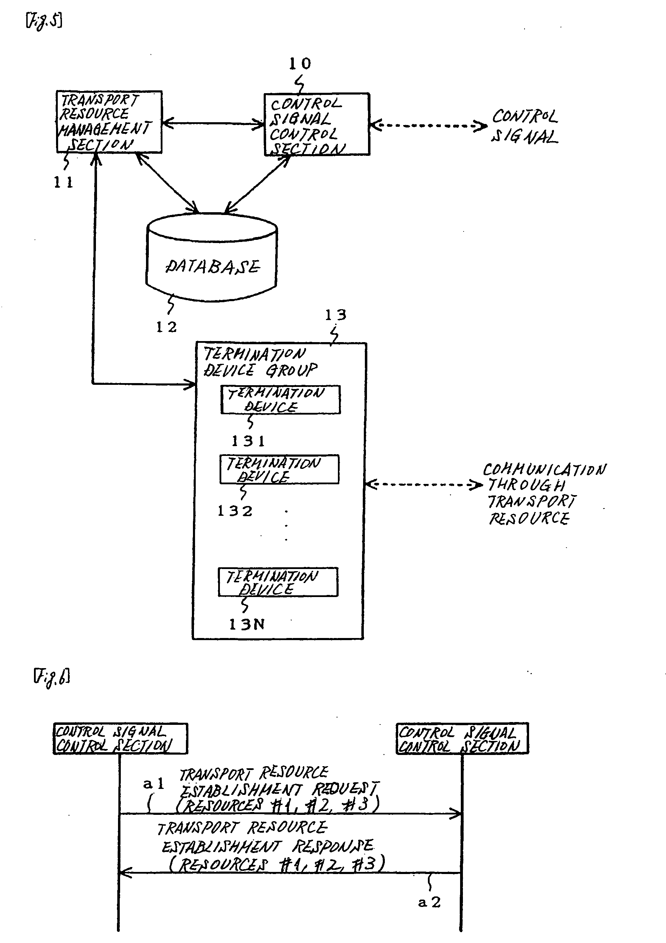

   Fig. 5 is a block diagram showing the configuration of a first embodiment of a communication device of the present invention.
[Fig. 6]
   Fig. 6 is a sequence diagram showing a procedure for exchanging control signals when a transport resource is established between the communication devices of the present invention.
[Fig. 7]

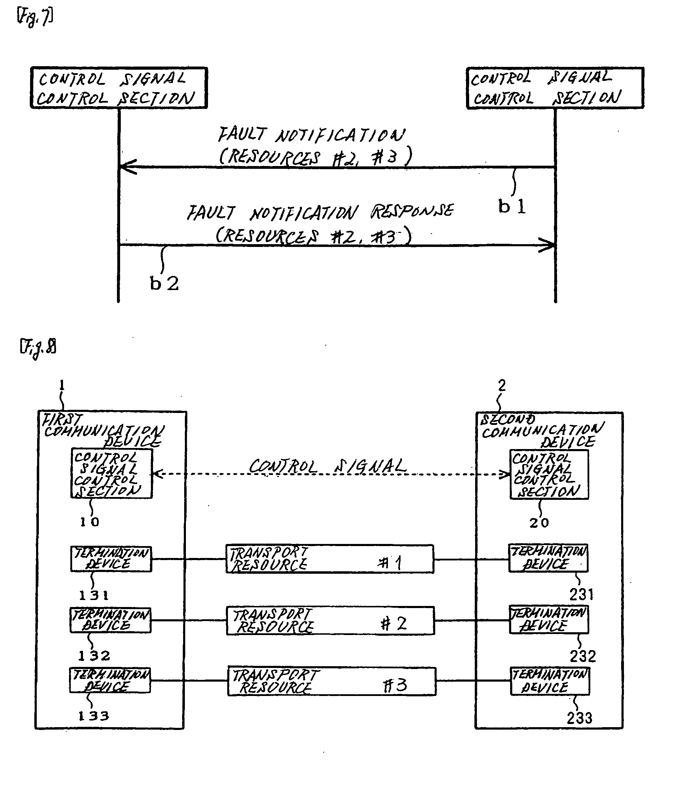

   Fig. 7 shows a procedure for exchanging control signals in a communication system of the present invention when it becomes unavailable due to faults which occur in a plurality of transport resources.
[Fig. 8]
   Fig. 8 is a block diagram showing an exemplary configuration of a communication system which comprises the communication device shown in Fig. 5.
[Fig. 9]

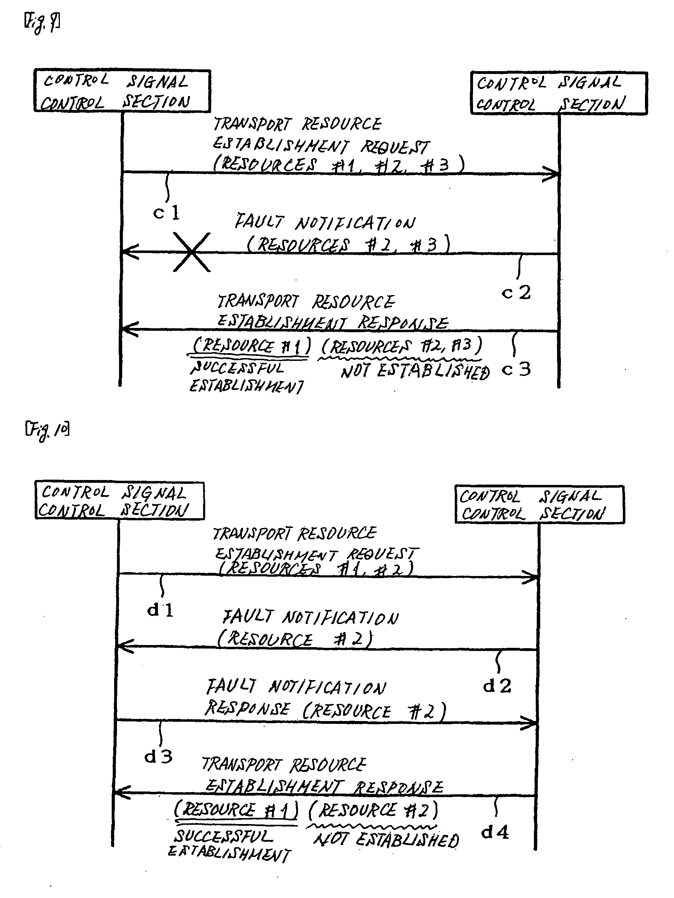

   Fig. 9 is a sequence diagram showing a procedure for exchanging control signals for pattern #1 in the communication system shown in Fig. 8.
[Fig. 10]
   Fig. 10 is a sequence diagram showing a procedure for exchanging control signals for pattern #2 in the communication system shown in Fig. 8.
[Fig. 11]

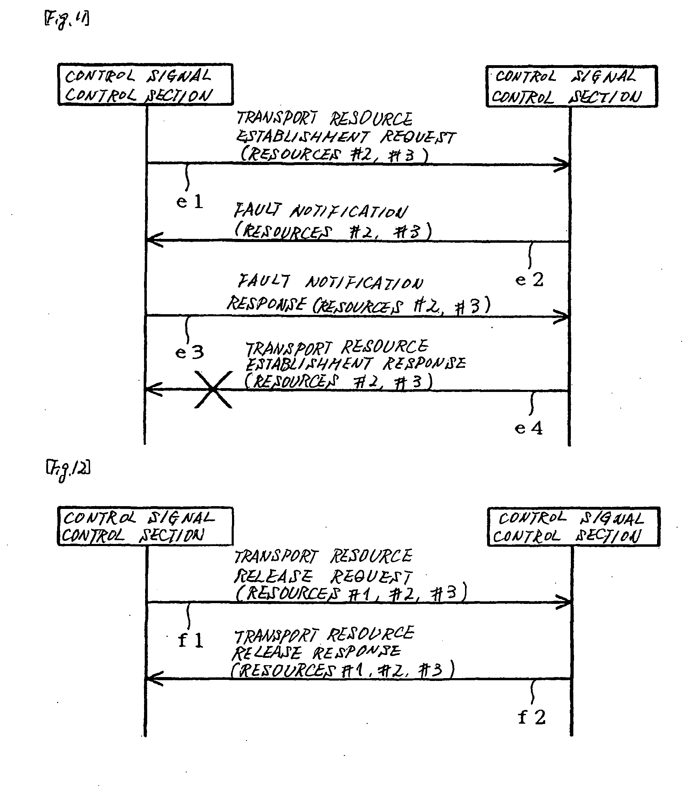

   Fig. 11 is a sequence diagram showing a procedure for exchanging control signals for pattern #3 in the communication system shown in Fig. 8.
[Fig. 12]
   Fig. 12 is a sequence diagram showing a procedure for exchanging control signals when transport resources are released in the communication system shown in Fig. 8.
[Fig. 13]

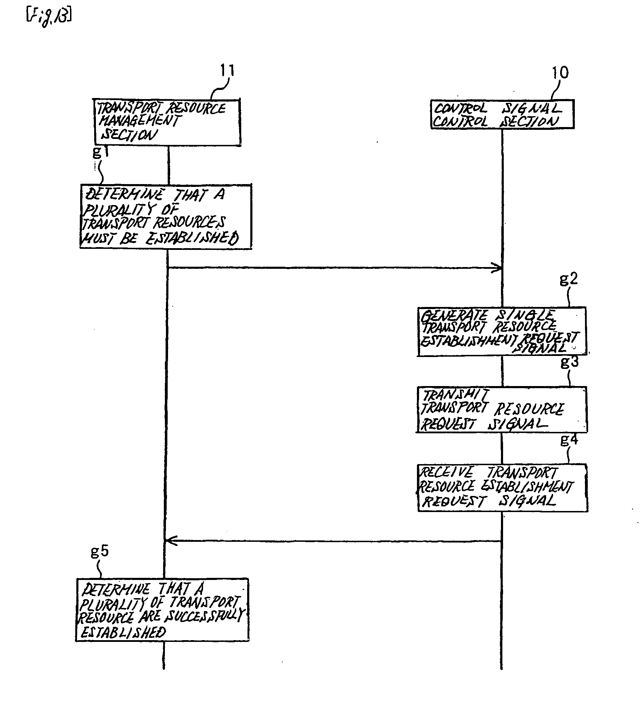

   Fig. 13 is a sequence diagram showing the operation of the communication system of the present invention.
[Fig. 14]

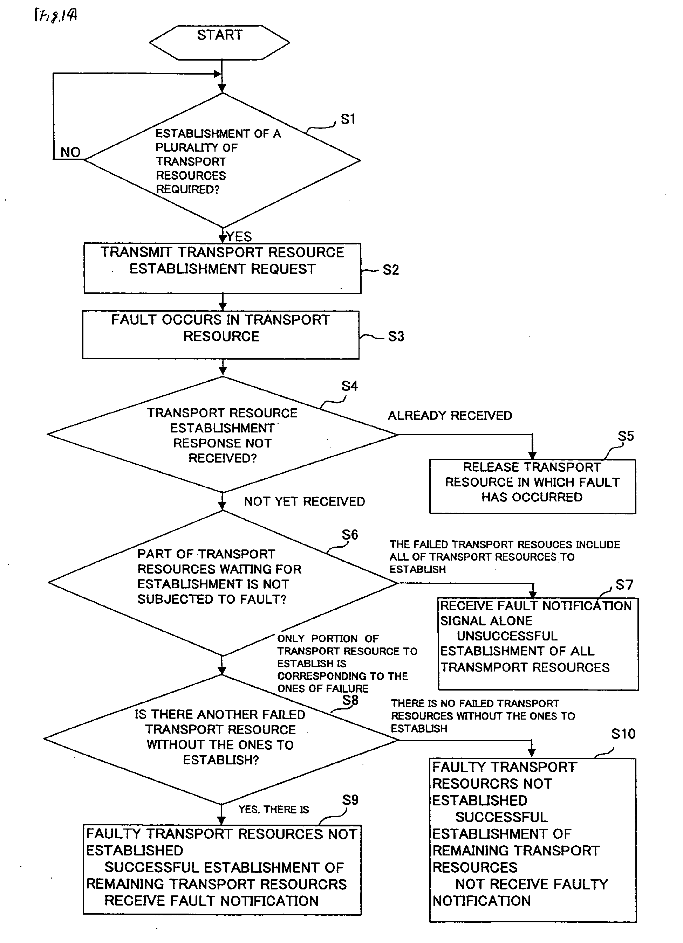

   Fig. 14 is a flow chart showing a processing procedure of a transport resource management section and a control signal control section shown in Fig. 5.
[Fig. 15]

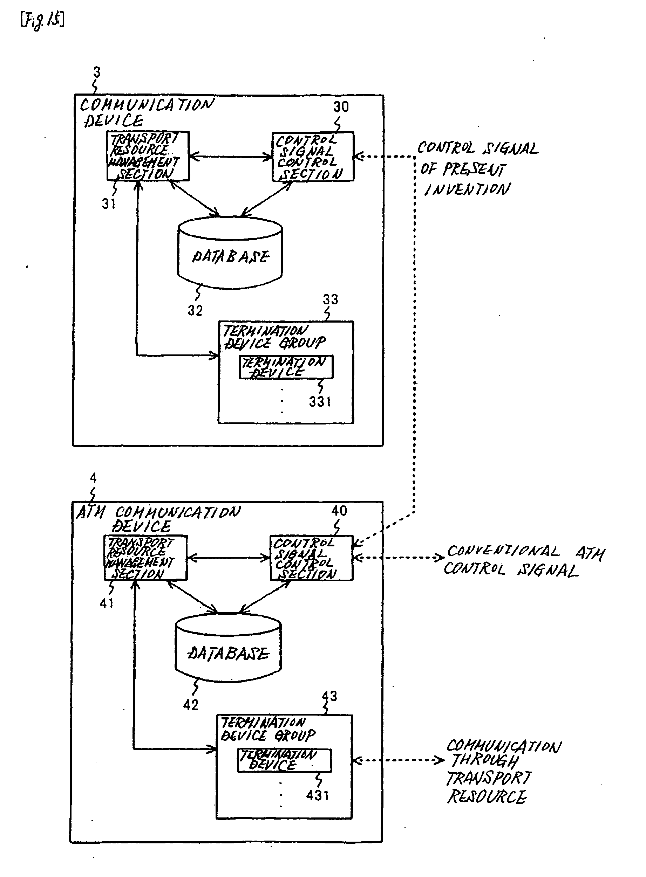

   Fig. 15 is a block diagram showing the configuration of a second embodiment of a communication system according to the present invention.

### BEST MODE FOR CARRYING OUT THE INVENTION

### (First Embodiment)

Fig. 5 is a block diagram showing the configuration of a first embodiment of a communication device of the present invention.

As shown in Fig. 5, the communication device of the present invention comprises control signal control section 10, transport resource management section 11, database 12, and termination device group 13 comprised of a plurality of termination devices 131 - 13N (N is an integer) connected to transport resources.

Termination devices 131 - 13N are connected to transport resources #1 - #N. The communication device shown in Fig. 5 enables user data to be transmitted to and received from another communication device (not shown) having a similar configuration by utilizing transport resources #1 - #N connected through these N termination devices 131 - 13N.

Transport resource management section 11 manages the state of each transport resource #1 - #N connected through termination device 131 - 13N (whether or not it is in use, whether or not a fault is occurring, and the like). Transport resource management unit 11 comprises a function of determining whether or not communications can be made with other communication devices utilizing transport resources #1 - #N, a function of determining which of transport resources #1 - #N is being utilized on a transport resource established with another communication device, and a function of requesting control signal control section 10 to establish a transport resource. Information indicative of the states of transport resources #1 - #N is preserved in database 12.

Control signal control section 10 comprises a function of transmitting a transport resource establishment request signal in response to a request from transport resource management section 11 for establishing a transport resource with another communication device, and a function of receiving a transport resource establishment response from another communication device to determine successful/unsuccessful establishment of a transport resource with the communication device.

The communication device of this embodiment can utilize a plurality of transport resources by exchanging a variety of control signals in a manner similar to conventional communication devices. The control signals are transmitted and received by control signal control section 10 provided in each communication device. However, unlike conventional communication devices, the communication device of this embodiment collectively performs, through a single control signal, a request for establishing a plurality of transport resources, a request for releasing transport resources, a notification of faults which have occurred in a plurality of transport resources, and the like.

Transport resource management section 11 and control signal control section 10 can be implemented, for example, by an LSI comprised of a variety of logic gates, or a CPU, a DSP or the like which operates in accordance with a program.

Next, a transport resource control method of the present invention will be described with reference to the drawings.

Fig. 6 is a sequence diagram showing a procedure for exchanging control signals when transport resources are established between the communication devices of the present invention. Fig. 6 shows a procedure for exchanging control signals when transport resources are established between two communication devices (first communication device and second communication device) using a plurality of transport resources (transport resources #1 - #3 in the example of Fig. 6).

As shown in Fig. 6, when transport resources #1 - #3 are established between the first communication device and the second communication device, the first communication device first transmits a transport resource establishment request signal to the second communication device to request the establishment of transport resources (step a1). In the transport resource control method of this embodiment, a request for establishing transport resources #1 - #3 is made by a single transport resource establishment request signal (resource #1, resource #2, resource #3). This transport resource establishment request signal contains information for specifying transport resources #1 - #3 utilized in communications.

Upon receipt of the transport resource establishment request signal (resource #1, resource #2, resource #3) from the first communication device, the second communication device analyzes the contents of the request, and determines whether or not it accepts a communication with the first communication device utilizing transport resources #1 - #3. Then when the communication utilizing transport resources #1 - #3 is accepted, the second communication device returns a transport resource establishment response signal (resource #1, resource #2, resource #3) to the first communication device (step a2). In this embodiment, this single transport resource establishment response signal contains information for specifying transport resources #1 - #3 utilized in the communication.

Fig. 7 shows a procedure for exchanging control signals when a plurality of transport resources (transport resource s #2 and #3 in the example of Fig. 7) become unavailable due to faults which have occurred therein.

Upon detecting that faults have occurred in transport resources #2 and #3, the second communication device transmits a fault notification signal (resource #2, resource #3) to the first communication device to notify that faults have occurred in transport resources #2 and #3 (step b1). In the transport resource control method of this embodiment, this single fault notification signal contains information for specifying transport resources #2 and #3 in which the faults have occurred.

Upon receipt of the fault notification signal (resource #2, resource #3) from the first communication device, the first communication device returns a fault notification response signal (resources #2, #3) to the second communication device for responding to the fault notification signal (step b2). In the transport resource control method of this embodiment, this single fault notification response signal contains information for specifying transport resources #2 and #3 in which the faults have occurred.

Fig. 8 is a block diagram showing an exemplary configuration of a communication system which comprises the communication devices of the present invention.

First communication device 1 shown in Fig. 8 comprises control signal control section 10 and termination devices 131 - 133, while second communication device 2 comprises control signal control section 20 and termination devices 231 - 233. Termination devices 131 and 231 are devices for making communications utilizing transport resource #1; termination devices 132 and 232 are devices for making communications utilizing transport resource #2; and termination devices 133 and 233 are devices for making communications utilizing transport resource #3.

Fig. 8 omits transport resource management sections, and databases included in first communication device 1 and second communication device 2. Here, assume that termination devices 232 and 233 included in second communication device 2 detect that faults have occurred in transport resources #2 and #3, and that transport resources #2 and #3 remain unavailable.

In the following, a description will be given of a procedure for exchanging control signals by the communication system of this embodiment when faults occur in transport resources, by using the communication system shown in Fig. 8 as an example, with reference to Figs. 9-11.

In this regard, in the following, a procedure for exchanging control signals when an attempt is made to establish transport resources #1 - #3 is defined as pattern #1; a procedure for exchanging control signals when an attempt is made to establish transport resources #1, #2 is defined as pattern #2; and a procedure for exchanging control signals when an attempt is made to establish transport resources #2, #3 is defined as pattern #3. Assume that faults have occurred in transport resource s #2 and #3 immediately before these establishment requests are made.

Fig. 9 is a sequence diagram showing a procedure for exchanging control signals for pattern #1 in the communication system shown in Fig. 8.

In pattern #1, as shown in Fig. 9, first communication device 1 transmits a transport resource establishment request signal (resources #1, #2, #3) to the second communication device for requesting the establishment of transport resources #1, #2, #3 at one time (step c1). This transport resource establishment request signal contains information for specifying transport resources #1 - #3 utilized in communications.

Since second communication device 2 has detected the occurrence of faults in transport resources #2 and #3, second communication device 2 attempts to transmit a fault notification signal (resources #2, #3) to first communication device 1 for indicating that faults have occurred in transport resources #2 and #3. However, here, since second communication device 2 has received the transport resource establishment request signal for specifying transport resources #1 - #3 from first communication device 1, second communication device 2 does not transmit a fault notification signal to first communication device 1 (step c2), but transmits a transport resource establishment response signal (step c3). This transport resource establishment response signal contains information which indicates that a transport resource #1 has been successfully established, and transport resources #2 and #3 have not been established.

Fig. 10 is a sequence diagram showing a procedure for exchanging control signals for pattern #2 in the communication system shown in Fig. 8.

In pattern #2, as shown in Fig. 10, first communication device 1 transmits a transport resource establishment request signal (resources #1, #2) to second communication device 2 for requesting the establishment of transport resources #1, #2 at one time (step d1). This transport resource establishment request signal contains information for specifying transport resources #1, #2 utilized in communications.

Since second communication device 2 has detected the occurrence of faults in transport resources #2 and #3, second communication device 2 attempts to transmit a fault notification signal (resources #2, #3) to first communication device 1 for indicating that faults have occurred in transport resources #2 and #3. However, here, since second communication device 2 has received the transport resource establishment request signal for specifying transport resources #1 and #2 from first communication device 1, second communication device 2 transmits a fault notification signal (resource #2) to first communication device 1 for notifying the occurrence of the fault in the transport resource #2 (step d2). This fault notification signal contains information which indicates that the fault has occurred in transport resource #2.

First communication device 1 transmits a fault notification response signal to the received fault notification signal (resource #2) to second communication device 2 (step d3). This fault notification response signal contains information indicative of transport resource #2 in which the fault has occurred.

Subsequently, second communication device 2 transmits a transport resource establishment response signal to first communication device 1 using control signal control section 20 (step d4). This transport resource establishment response signal contains information which indicates that a transport resource #1 has been successfully established, but a transport resource #2 has not been established.

Fig. 11 is a sequence diagram showing a procedure for exchanging control signals for pattern #3 in the communication system shown in Fig. 8.

In pattern #3, as shown in Fig. 11, first communication device 1 transmits a transport resource establishment request signal (resources #2, #3) to second communication device 2 for requesting the establishment of transport resources #2, #3 at one time (step e1). This transport resource establishment request signal contains information for specifying transport resources #2, #3 utilized in communications.

Since second communication device 2 has received the transport resource establishment request signal for specifying transport resources #2 and #3 in which the occurrence of faults has been detected, from first communication device 1, second communication device 2 transmits a fault notification signal (resources #2, #3) to first communication device 1 for notifying the occurrence of the faults in transport resources #2 and #3 (step e2). This fault notification signal contains information which indicates that the faults have occurred in transport resources #2 and #3.

First communication device 1 transmits a fault notification response signal (resources #2, #3) to the received fault notification signal (resources #2, #3) to second communication device 2 (step e3). This fault notification response signal contains information that indicates that faults have occurred in transport resources #2 and #3.

In this event, since second communication device 2 has already transmitted the fault notification signal which indicates the occurrence of the faults in transport resources #2 and #3 to first communication device 1, second communication device 2 does not transmit a transport resource establishment response signal to first communication device 1 (step e4).

Fig. 12 is a sequence diagram showing a procedure for exchanging control signals when transport resources are released in the communication system shown in Fig. 8.

Fig. 12 shows a procedure for exchanging control signals when transport resources #1, #2, #3 are fully released in accordance with the end of communications, for example, in the communication system shown in Fig. 8.

As shown in Fig. 12, for releasing transport resources #1, #2, #3 which have been utilized between first communication device 1 and second communication device 2, first communication device 1 first transmits a transport resource release request signal (resources #1, #2, #3) to second communication device 2 for requesting a release of transport resources #1, #2, #3 at one time (step f1). This transport resource release request signal contains information for specifying transport resources #1, #2, #3 which have been utilized and established.

Upon receipt of the transport resource release request (resources #1, #2, #3) from first communication device 1, second communication device 2 releases transport resources #1 - #3 which have been utilized in communications with first communication device 1 (disconnects a communication with each termination device), and transmits a transport resource release response signal (resources #1, #2, #3) to first communication device 1 (step f2).

Fig. 13 is a sequence diagram showing the operation of the communication system of the present invention.

Specifically, Fig. 13 shows a processing procedure of first communication device 1 when a transport resource established procedure is initiated between first communication device 1 and second communication device 2 in order to utilize a plurality of transport resources, giving the communication system shown in Fig. 8 as an example.

As shown in Fig. 13, when transport resource management section 11 of first communication device 1 determines that a plurality of transport resources must be established between first communication device 1 and second communication device 2 (step g1), transport resource management section 11 instructs control signal control section 10 to establish a plurality of transport resources between first communication device 1 and second communication device 2.

Control signal control section 10 generates a single transport resource establishment request signal in accordance with the instruction from transport resource management section 11, and populates information indicative of a plurality of transport resources into the transport resource establishment request signal (step g2).

Upon generating the transport resource establishment request signal, control signal control section 10 transmits the transport resource establishment request signal to second communication device 2 (step g3). On the other hand, as control signal control section 10 receives a transport resource establishment response signal from second communication device 2 as response to the transport resource establishment request signal (step g4), control signal control section 10 transmits the information contained in the transport resource establishment response signal to transport resource management section 11. Here, since the transport resources have been successfully established, transport resource management section 11 determines that a plurality of transport resources have been successfully established for use in communications based on the information transferred from control signal control section 10 (step g5).

Fig. 14 is a flow chart showing a processing procedure of the transport resource management section and control signal control section shown in Fig. 5.

Specifically, Fig. 14 shows a processing procedure of transport resource management section 11 included in first communication device 1 when transport resources are established between first communication device 1 and second communication device 2 utilizing a plurality of transport resources, giving the communication system shown in Fig. 8 as an example. Fig. 14 also includes processing when faults have occurred in transport resources upon establishment of transport resources.

As shown in Fig. 14, when transport resource management section 11 of first communication device 1 determines that a plurality of transport resources are required for communications with second communication device 2 (step S1), transport resource management section 11 instructs control signal control section 10 to establish a plurality of transport resources between first communication device 1 and second communication device 2.

Control signal control section 10 creates a single transport resource establishment request signal which contains information indicative of a plurality of transport resource in accordance with the instruction from transport resource management section 11, and transmits the transport resource establishment request signal to the second communication device (step S2).

When a fault is occurring in a transport resource (step S3), control signal control section 10 first determines whether or not a transport resource establishment response signal has been already received from second communication device 2 (step S4).

When the transport resource establishment response signal has already been received from second communication device 2, control signal control section 10 releases the transport resource in which the fault is occurring, and that is utilized on an established transport resource upon receipt of a fault notification signal from second communication device 2 (step S5). On the other hand, when the transport resource establishment response signal has not yet been received from the second communication device (step S4), control signal control section 10 determined whether or not there is a transport resource which are waiting to be established, and in which no fault has occurred (not subjected to faults) (step S6).

When there is no transport resource in which no fault has occurred, and which are waiting to be established, i.e., when faults are occurring in all transport resources to be utilized in transport resources which are waiting to be established, control signal control section 10 releases the transport resources in which the faults are occurring, upon receipt of a fault notification signal from second communication device 2, and determines that all the transport resources have not been established (step S7). Otherwise, control signal control section 10 determines whether or not there is another failed transport resource without the ones to establish (step S8).

When there is part of the failed transport resource without the ones to establish, control signal control section 10 receives a fault notification signal and a transport resource establishment response signal from second communication device 2. In this event, control signal control section 10 determines that a failed transport resource, among the transport resources to establish, has not been established, and that a transport resource in which no fault is occurring has been successfully established. Also, control signal control section 10 releases transport resources which has established, and in which faults are occurring (step S9).

On the other hand, when there is no failed transport resource without the ones to establish, control signal control section 10 receives a transport resource establishment response transmitted from second communication device 2, but does not receive a fault notification signal. In this event, control signal control section 10 determines that a failed transport resource, among transport resources which are waiting to be established, has not been established, and a transport resource in which no fault is occurring has been successfully established (step S10).

According to the communication device of this embodiment, when one wishes to establish a plurality of transport resources at one time, the establishment of the plurality of transport resources is requested using a single control signal, thus making it possible to reduce the amount of control signals used in the establishment of the transport resources.

Also, when faults occur in a plurality of transport resources at one time, a single control signal is used to notify that the faults are occurring in the plurality of transport resources, thus making it possible to reduce the number of control signals used to notify the occurrence of the faults.

Further, in the communication device of this embodiment, to release transport resources which have been utilized on a plurality of established transport resources at one time, a single control signal is used to request release of the plurality of transport resources, thus making it possible to reduce the number of control signals used to release the transport resources.

Also, in this embodiment, since a notification is made as to whether or not a fault is occurring in each transport resource using either a fault notification signal or a transport resource establishment response signal, information as to whether or not a fault is occurring in a transport resource can be unified among respective communication devices while reducing the number of control signals. Accordingly, even if a fault is occurring in part of the transport resources to be established, the transport resource in which the fault is occurring will never be established by mistake.

### (Second Embodiment)

Fig. 15 is a block diagram showing the configuration of a second embodiment of a communication system of the present invention.

The communication system of the second embodiment is configured to transmit and receive control signals through an ATM communication device for transmitting and receiving ATM control signals, shown in the conventional techniques in the communication device shown in the first embodiment. Assume, however, that the communication device of this embodiment and the ATM communication device are configured to be able to transmit and receive a request for establishing a plurality of transport resources, a transport resource release request, a fault notification, and the like, through a single control signal, in accordance with the transport resource control method shown in the first embodiment.

As shown in Fig. 15, communication device 3 of the second embodiment comprises control signal control section 30, transport resource management section 31, database 32, and a plurality of termination devices 331 - 33N connected to transport resources #1 - #N.

ATM communication device 4 comprises control signal control section 40, transport resource management section 41, data base 42, and a plurality of termination devices connected to transport resources #1 - #N.

ATM communication device 4 is capable of handling ATM control signals as described above, and when a control signal transmitted from communication device 3 contains information for notifying that a request has been received to establish a plurality of transport resources, a release request, or faults which have occurred in a plurality of transport resources, ATM communication device 4 transmits each items of information for notifying a transport resource establishment request, a release request, or faults which have occurred on a plurality of transport resources using respective individual control signals as ATM control signals utilizing an ATM communication network.

Also, when an ATM control signal is received through an ATM communication network, ATM communication device 4 transmits a single control signal which contains information for notifying to communication device 3 that a transport resource establishment request has been received, or that faults have occurred in a plurality of transport resources.

Communication device 3, which is similar in configuration to the communication device shown in the first embodiment, is capable of virtually managing a plurality of transport resources. Here, as a virtual transport resource management method, for example, a method of assigning call information which is uniquely determined on a call-by-call basis to a mobile terminal device included in a mobile communication system is contemplated. In this event, the call information is a minimum unit of transport resources in the virtual transport resource management. The call information corresponds one-to-one to a physical transport resource.

According to this embodiment, even when a control signal is transmitted and received through a communication device to which the transport resource control method of the present invention shown in the first embodiment is not applied, a plurality of transport resources can be utilized in a similar manner to the communication device of the first embodiment.

## Claims

1. A communication system capable of making a communication utilizing a plurality of transport resources by exchanging control signals between communication devices, wherein:
a single control signal transmitted and received between said communication devices includes information that indicate that a plurality of transport resources are being utilized in the communication.

2. The communication system according to claim 1, wherein:
said communication system comprises a plurality of transport resources, and
said communication device utilizes the transport resources to communicate with a communication device which utilizes the same transport resources.

3. The communication system according to claim 1, wherein said communication device comprises:
a transport resource management section for managing the state of the transport resources ; and
a control signal control section for transmitting and receiving the control signal.

4. The communication system according to claim 3, wherein:
said transport resource management section comprises:
a function of determining whether or not a communication utilizing the transmission line resources is required;
a function of determining a transport resource utilized in the communication; and
a function of requesting said control signal control section to establish a transport resource, and
said control signal control section comprises:
a function of transmitting a transport resource establishment request for requesting the establishment of the transport resource to another communication device in accordance with a request from said transport resource management section;
a function of including information that indicates that there is a plurality of transport resources in the control signal when the plurality of transport resources are required; and
a function of determining whether the transport resource has been successfully established or not with the other communication device upon receipt of a transport resource establishment response signal which is a response signal to the transport resource establishment request.

5. The communication system according to any one of claims 1 to 4, wherein:
said control signal includes a transport resource establishment request signal for requesting the establishment of the transport resource, or a transport resource release request signal for requesting a release of a transport resource, or a fault notification signal for notifying a fault which occurs in a transport resource.

6. The communication system according to claim 5, wherein:
when a fault occurs in the transport resource, said communication device notifies another communication device of the fault occurring in the transport resource through either a fault notification signal or a transport resource establishment response signal to the transport resource establishment request signal.

7. The communication system according to claim 5 or 6, comprising an ATM communication device capable of making a communication utilizing an ATM communication network, wherein:
said communication device notifies the transport resource establishment request signal, the transport resource release request signal or the fault notification signal to the other communication device through said ATM communication device.

8. A communication device capable of making a communication utilizing a plurality of transport resources by exchanging control signals, comprising:
a control signal control section for including information indicating that is a plurality of transport resources that are used for communication in a single control signal.

9. The communication device according to claim 8, comprising a plurality of termination devices for connecting to the plurality of transport resources, wherein:
said communication device utilizes the transport resources to communicate with a communication device which utilizes the same transport resources.

10. The communication device according to claim 8, further comprising:
a transport resource management section for managing the state of the transport resources,
wherein said control signal control section transmits and receives the control signal in response to a request from said transport resource management section.

11. The communication device according to claim 8, wherein:
said transport resource management section comprises:
a function of determining whether or not a communication utilizing the transport resources is required;
a function of determining a transport resource utilized in the communication; and
a function of requesting said control signal control section to establish a transport resource, and
said control signal control section comprises:
a function of transmitting a transport resource establishment request for requesting the establishment of the transport resource to another communication device in accordance with a request from said transport resource management section;
a function of including information that indicates that there is a plurality of transport resources in the control signal when the plurality of transport resources are required; and
a function of determining whether the transport resource has been successfully established or not with the other communication device upon receipt of a transport resource establishment response signal which is a response signal to the transport resource establishment request.

12. The communication device according to any one of claims 8 to 11, wherein:
said control signal includes a transport resource establishment request signal for requesting the establishment of the transport resource, a transport resource release request signal for requesting a release of a transport resource or a fault notification signal for notifying a fault which occurs in a transport resource.

13. The communication device according to claim 12, wherein:
when a fault occurs in the transport resource, said control signal control section notifies another communication device of the fault occurring in the transport resource through either a fault notification signal or a transport resource establishment response signal to the transport resource establishment request signal.

14. A transport resource control method for enabling a communication utilizing a plurality of transport resources by exchanging control signals between communication devices, wherein:
a single control signal transmitted and received between said communication devices includes information indicative of a plurality of transport resources utilized in the communication.

15. The transport resource control method according to claim 14, wherein:
said communication system comprises a plurality of transport resources, and
a communication is made utilizing the transport resources between communication devices which utilize the same transport resources.

16. The transport resource control method according to claim 14, wherein said communication device comprises:
processing for determining whether or not a communication utilizing the transport resources is required;
processing for determining a transport resource utilized in the communication;
processing for requesting the establishment of the transport resource;
processing for transmitting a transport resource establishment request for requesting the establishment of the transport resource to another communication device;
processing for including information indicative of a plurality of transport resources in the control signal when the plurality of transport resources are required; and
processing for determining whether the transport resource has been successfully established or not with the other communication device upon receipt of a transport resource establishment response signal which is a response signal to the transport resource establishment request.

17. The transport resource control method according to any one of claims 14 to 16, wherein:
said control signal includes a transport resource establishment request signal for requesting the establishment of the transport resource, a transport resource release request signal for requesting a release of a transport resource or a fault notification signal for notifying a fault which occurs in a transport resource.

18. The transport resource control method according to claim 17, wherein:
when a fault occurs in the transport resource, said communication device notifies another communication device of the fault occurring in the transport resource through a fault notification signal or a transport resource establishment response signal to the transport resource establishment request signal.

19. The transport resource control method according to claim 17 or 18, wherein:
said communication device notifies the transport resource establishment request signal, the transport resource release request signal or the fault notification signal to the other communication device through an ATM communication device capable of making a communication utilizing an ATM communication network.

## Amended claims

### Amended claims under Art. 19.1 PCT

**1.** A communication system capable of making a communication utilizing a plurality of transport resources by exchanging control signals between communication devices, wherein:
a single control signal transmitted and received between said communication devices includes information that indicate that a plurality of transport resources are being utilized in the communication.

**2.** The communication system according to claim 1, wherein:
said communication system comprises a plurality of transport resources, and
said communication device utilizes the transport resources to communicate with a communication device which utilizes the same transport resources.

**3.** The communication system according to claim 1, wherein said communication device comprises:
a transport resource management section for managing the state of the transport resources; and
a control signal control section for transmitting and receiving the control signal.

**4.** The communication system according to claim 3, wherein:
said transport resource management section comprises:
a function of determining whether or not a communication utilizing the transport resources is required;
a function of determining a transport resource utilized in the communication; and
a function of requesting said control signal control section to establish a transport resource, and
said control signal control section comprises:
a function of transmitting a transmission line establishment request for requesting the establishment of the transport resource to another communication device in accordance with a request from said transport resource management section;
a function of including information that indicates that there is a plurality of transport resources in the control signal when the plurality of transport resources are required; and
a function of determining whether the transport resource has been successfully established or not with the other communication device upon receipt of a transport resource establishment response signal which is a response signal to the transport resource establishment request.

**5.** The communication system according to any one of claims 1 to 4, wherein:
said control signal includes a transport resource establishment request signal for requesting the establishment of the transport resource, a transport resource release request signal for requesting a release of a transport resource or a fault notification signal for notifying a fault which occurs in a transport resource.

**6.** The communication system according to claim 5, wherein:
when a fault occurs in the transport resource, said communication device notifies another communication device of the fault occurring in the transport resource through either a fault notification signal or a transport resource establishment response signal to the transport resource establishment request signal.

**7.** The communication system according to claim 6, wherein:
when all transport resources in which faults have occurred are included in a plurality of transport resources used to establish transport resources requested through the transport resource establishment request signal, said communication device returns a transport resource establish response signal to a communication device which has requested the transport resource establishment request signal, said transport resource establishment response signal including information indicating that a transport resource in which no fault occurs has been successfully established, and indicating that a transport resource in which a fault had occurred has not been established.

**8.** The communication system according to claim 6, wherein:
when a transport resource in which a fault has occurred and a transport resource in which no fault occurs are included in a plurality of transport resources used to establish transport resources requested through the transport resource establishment request signal, said communication device returns a fault notification signal to a communication device which has requested the transport resource establishment request signal, said fault notification signal including information indicating the transport resource in which a fault has occurred, and
upon receipt of the fault notification response signal returned from said requesting communication device, said communication device returns a transport resource establishment response signal to said communication device which has requested the transport resource establishment request signal, said transport resource establishment response signal including information indicating that a transport resource in which no fault occurs has been successfully established, and indicating that a transport resource in which a fault had occurred has not been established.

**9.** The communication system according to claim 6, wherein:
when faults occur in all transport resources used to establish a transport resource requested by the transport resource establishment request signal, said communication device returns a fault notification signal including information indicating of the transport resources in which the faults have occurred to said communication device which has requested the transport resource establishment request signal.

**10.** The communication system according to any one of claims 5 to 9, comprising an ATM communication device capable of making a communication utilizing an ATM communication network, wherein:
said communication device notifies the transport resource establishment request signal, the transport resource release request signal or the fault notification signal to the other communication device through said ATM communication device.

**11.** A communication device capable of making a communication utilizing a plurality of transport resources by exchanging control signals, comprising:
a control signal control section for including information indicating of a plurality of transport resources utilized for communication in a single control signal.

**12.** The communication device according to claim 11, comprising a plurality of termination devices for connecting to the plurality of transport resources,
wherein said communication device utilizes the transport resources to communicate with a communication device which utilizes the same transport resources.

**13.** The communication device according to claim 11, further comprising:
a transport resource management section for managing the state of the transport resources,
wherein said control signal control section transmits and receives the control signal in response to a request from said transport resource management section.

**14.** The communication device according to claim 11, wherein:
said transport resource management section comprises:
a function of determining whether or not a communication utilizing the transport resources is required;
a function of determining a transport resource utilized in the communication; and
a function of requesting said control signal control section to establish a transport resource, and
said control signal control section comprises:
a function of transmitting a transport resource establishment request to request the establishment of the transport resource to another communication device in accordance with a request from said transport resource management section;
a function of including information that indicates that there is a plurality of transport resources in the control signal when the plurality of transport resources are required; and
a function to determine whether the transport resource has been successfully established or not with the other communication device upon receipt of a transport resource establishment response signal which is a response signal to the transport resource establishment request.

**15.** The communication device according to any one of claims 11 to 14, wherein:
said control signal includes a transport resource establishment request signal for requesting the establishment of the transport resource, a transport resource release request signal for requesting a release of a transport resource or a fault notification signal for notifying a fault which occurs in a transport resource.

**16.** The communication device according to claim 15, wherein:
when a fault occurs in the transport resource, said control signal control section notifies another communication device of the fault occurring in the transport resource through either a fault notification signal or a transport resource establishment response signal to the transport resource establishment request signal.

**17.** The communication system according to claim 16, wherein:
when all transport resources in which faults have occurred are included in a plurality of transport resources used to establish transport resources requested through the transport resource establishment request signal, said control signal control section returns a transport resource establish response signal to a communication device which has requested the transport resource establishment request signal, said transport resource establishment response signal including information indicating that a transport resource in which no fault occurs has been successfully established, and indicating that a transport resource in which a fault had occurred has not been established.

**18.** The communication system according to claim 16, wherein:
when a transport resource in which a fault has occurred and a transport resource in which no fault occurs are included in a plurality of transport resources used to establish transport resources requested through the transport resource establishment request signal, said control signal control section returns a fault notification signal to a communication device which has requested the transport resource establishment request signal, said fault notification signal including information indicating a transport resource in which a fault has occurred, and
upon receipt of the fault notification response signal returned from said requesting communication device, said control signal control section returns a transport resource establishment response signal to said communication device which has requested the transport resource establishment request signal, said transport resource establishment response signal including information indicating that a transport resource in which no fault occurs has been successfully established, and indicating that a transport resource in which a fault had occurred has not been established.

**19.** The communication device according to claim 16, wherein:
when faults occur in all transport resources used to establish a transport resource requested by the transport resource establishment request signal, said communication device returns a fault notification signal including information indicating of the transport resources in which the faults have occurred to said communication device which has requested the transport resource establishment request signal.

**20.** A transport resource control method for enabling a communication utilizing a plurality of transport resources by exchanging control signals between communication devices, wherein:
a single control signal transmitted and received between said communication devices includes information indicating of a plurality of transport resources utilized in the communication.

**21.** The transport resource control method according to claim 20, wherein:
said communication system comprises a plurality of transport resources, and
a communication is made utilizing the transport resources between communication devices which utilize the same transport resources.

**22.** The transport resource control method according to claim 20, wherein said communication device comprises:
processing for determining whether or not a communication utilizing the transport resources is required;
processing for determining a transport resource utilized in the communication;
processing for requesting the establishment of the transport resource;
processing for transmitting a transport resource establishment request for requesting the establishment of the transport resource to another communication device;
processing for including information indicative of a plurality of transport resources in the control signal when the plurality of transport resources are required; and
processing for determining whether the transport resource has been successfully established or not with the other communication device upon receipt of a transport resource establishment response signal which is a response signal to the transport resource establishment request.

**23.** The transport resource control method according to any one of claims 20 to 22, wherein:
said control signal includes a transport resource establishment request signal for requesting the establishment of the transport resource, a transport resource release request signal for requesting a release of a transport resource or a fault notification signal for notifying a fault which occurs in a transport resource.

**24.** The transport resource control method according to claim 23, wherein:
when a fault occurs in the transport resource, said communication device notifies another communication device of the fault occurring in the transport resource through either a fault notification signal or a transport resource establishment response signal to the transport resource establishment request signal.

**25.** The transport resource control method according to claim 23, wherein:
when all transport resources in which faults have occurred are included in a plurality of transport resources used to establish transport resources requested through the transport resource establishment request signal, said communication device returns a transmission line establish response signal to a communication device which has requested the transport resource establishment request signal, said transport resource establishment response signal including information indicating that a transport resource in which no fault occurs has been successfully established, and indicating that a transport resource in which a fault had occurred has not been established.

**26.** The transmission line control method according to claim 23:
when a transport resource in which a fault has occurred and a transport resource in which no fault occurs are included in a plurality of transport resources used to establish transport resources requested through the transport resource establishment request signal, said communication device returns a fault notification signal to a communication device which has requested the transport resource establishment request signal, said fault notification signal including information indicative of the transport resource in which a fault has occurred, and
upon receipt of the fault notification response signal returned from said requesting communication device, said communication device returns a transport resource establishment response signal to said communication device which has requested the transmission line establishment request signal, said transport resource establishment response signal including information indicating that a transport resource in which no fault occurs has been successfully established, and indicating that a transport resource in which a fault had occurred has not been established.

**27.** The transport resource control method according to claim 23, wherein:
when faults occur in all transport resources used to establish a transport resource requested by the transport resource establishment request signal, said communication device returns a fault notification signal including information indicative of the transport resources in which the faults have occurred to said communication device which has requested the transport resource establishment request signal.

**28.** The communication system according to any one of claims 24 to 27, wherein:
said communication device notifies the transport resource establishment request signal, the transport resource release request signal or the fault notification signal to the other communication device through an ATM communication device capable of making a communication utilizing an ATM communication network.
